(19) Europäisches Patentamt
European Patent Office
Office européen des brevets

(11) EP 0 928 380 B1

(12) **EUROPÄISCHE PATENTSCHRIFT**

(45) Veröffentlichungstag und Bekanntmachung des Hinweises auf die Patenterteilung:
**24.05.2000 Patentblatt 2000/21**

(21) Anmeldenummer: **97939969.8**

(22) Anmeldetag: **13.08.1997**

(51) Int Cl.⁷: **F16D 48/08**, B60K 41/24
// (F16D105/08, 109:02, 103:02, 113:00)

(86) Internationale Anmeldenummer:
**PCT/DE97/01793**

(87) Internationale Veröffentlichungsnummer:
**WO 98/13621 (02.04.1998 Gazette 1998/13)**

(54) **AUTOMATISCH GESTEUERTE KUPPLUNG MIT KRIECHREGELUNG**

AUTOMATIC CLUTCH WITH CREEP CONTROL

EMBRAYAGE AUTOMATIQUE AVEC REGULATION A BASSES VITESSES

(84) Benannte Vertragsstaaten:
**DE ES FR GB IT**

(30) Priorität: **25.09.1996 DE 19639293**

(43) Veröffentlichungstag der Anmeldung:
**14.07.1999 Patentblatt 1999/28**

(73) Patentinhaber: **DaimlerChrysler AG**
**70567 Stuttgart (DE)**

(72) Erfinder:
• **KOSIK, Franz**
**D-73760 Ostfildern (DE)**

• **GRASS, Thomas**
**D-73660 Urbach (DE)**

(74) Vertreter: **Patentanwalts-Partnerschaft**
**Rotermund + Pfusch**
**Waiblinger Strasse 11**
**70372 Stuttgart (DE)**

(56) Entgegenhaltungen:
**EP-A- 0 375 162     EP-A- 0 536 932**
**EP-A- 0 731 294     DE-A- 3 306 519**
**US-A- 5 067 599     US-A- 5 176 234**

## Beschreibung

Die Erfindung betrifft eine automatische Steuerung einer Kupplung im Antriebstrang eines Kraftfahrzeuges mit fahrerseitig zwischen unterschiedlichen Getriebestufen bzw. Gängen geschaltetem Getriebe und fahrerseitig durch ein Steuerorgan, z.B. Fahrpedal, gesteuertem Motor, wobei die Kupplung durch ein von der Steuerung betätigtes motorisches Stellaggregat bei geringer Fahrgeschwindigkeit bzw. stehendem Fahrzeug und eingelegter Getriebestufe, unbetätigter Bremse und nicht betätigtem Steuerorgan automatisch auf ein Kriechmoment eingestellt wird.

Bei Kraftfahrzeugen mit üblichen Verbrennungsmotoren muß im Antriebstrang ein Getriebe angeordnet sein, um das Übersetzungsverhältnis zwischen der Drehzahl des Fahrzeugmotors und der Drehzahl der Antriebsräder entsprechend der jeweiligen Fahrgeschwindigkeit und Belastung des Fahrzeuges ändern zu können. Bei üblichen vom Fahrer geschalteten Getrieben muß während des Wechsels einer Getriebestufe der Kraftfluß zwischen Motor und Antriebsrädern durch Öffnen der Kupplung unterbrochen werden.

Beim Anfahren des Fahrzeuges muß die Kupplung mit Schlupf arbeiten, da die vorgenannten Getriebe nicht stufenlos zu arbeiten vermögen und übliche Fahrzeugmotoren, insbesondere Verbrennungsmotoren, nur oberhalb einer Mindestdrehzahl arbeiten und hinreichend Leistung abgeben können.

Es ist grundsätzlich bekannt, hierzu automatisch gesteuerte Kupplungen einzusetzen, d.h. die Kupplung wird beim Wechsel einer Getriebestufe automatisch geöffnet und nachfolgend wieder geschlossen. Bei Anfahrsituationen überträgt die Kupplung zunächst nur ein begrenztes Moment, d.h. ein Kriechmoment, welches ausreicht, das Fahrzeug unter normalen Fahrverhältnissen kriechend in Bewegung zu setzen. Wird dann das Fahrzeug durch entsprechende Betätigung des Fahrpedals beschleunigt, so wird das übertragbare Moment der Kupplung zunehmend erhöht, so daß in Abhängigkeit von den jeweiligen Betriebsparametern bei mehr oder weniger hoher Drehzahl des Motors von der Kupplung ein Moment übertragen werden kann, welches oberhalb des Drehmomentes des Motors liegt.

Die US 5 067 599 zeigt eine automatisch gesteuerte Kupplung mit den eingangs angegebenen Merkmalen. Dabei ist vorgesehen, daß das Fahrpedal bei Parkmanövern bei schwacher Betätigung des Fahrpedales keinen unmittelbaren Einfluß auf die Motorleistung hat, sondern im wesentlichen nur das übertragbare Kupplungsmoment steuert, derart, daß mit zunehmend betätigtem Fahrpedal von der Kupplung ein zunehmendes Kriechmoment übertragen wird.

Aus der EP 03 75 162 B1 ist es bekannt, die automatische Steuerung der Kupplung in einer Kriechphase des Fahrzeuges auch in Abhängigkeit von der Bremsbetätigung arbeiten zu lassen.

Aufgabe der Erfindung ist es nun, die Steuerung der Kupplung der Kriechphase noch weiter zu verbessern.

Diese Aufgabe wird erfindungsgemäß dadurch gelöst, daß bei geringer Fahrgeschwindigkeit bzw. stehendem Fahrzeug bei eingelegter Fahrstufe, unbetätigter Bremse und nicht betätigtem Steuerorgan zunächst ein für eine normale Anfahrsituation vorgesehenes relativ hohes Kriechmoment, welches das Fahrzeug sicher sowie vergleichsweise zügig anfahren läßt, eingestellt und nach vorgegebener Zeitspanne - bei weiterhin unbetätigter Bremse und nicht betätigtem Steuerorgan - automatisch unter entsprechender Verminderung einer Kriechneigung des Fahrzeuges vermindert wird.

Insbesondere kann beim Anfahren auch nach Beendigung einer Bremsbetätigung zunächst das relativ hohe Kriechmoment eingestellt werden.

Die Erfindung beruht auf dem allgemeinen Gedanken, zu Beginn einer Anfahrsituation, d.h. nach Einlegen einer Getriebestufe und Beendigung einer Bremsbetätigung und nicht betätigtem Fahrpedal, die Kupplung zunächst auf ein relativ hohes Kriechmoment zu steuern, um zu gewährleisten, daß das Fahrzeug sicher und vergleichsweise zügig anfahren kann. Sollte nun innerhalb der vorgegebenen Zeitspanne das Fahrpedal weiterhin unbetätigt bleiben, so ist dies ein Anzeichen dafür, daß keine "normale" Anfahrsituation vorliegt und das zum Antrieb des Fahrzeuges wirksame Drehmoment vermindert werden sollte. Damit wird gleichzeitig die Kupplung vor übermäßigem Verschleiß geschützt. Dies gilt insbesondere dann, wenn der Fahrer ein stillstehendes bzw. nahezu stillstehendes Fahrzeug an einer Steigung allein unter Ausnutzung des Kriechmomentes der Kupplung halten sollte.

Gemäß einer bevorzugten Ausführungsform der Erfindung kann die Absenkung des Kriechmomentes unterbleiben, wenn ein Schwellwert der Fahrgeschwindigkeit überschritten worden ist. Denn eine höhere Fahrgeschwindigkeit deutet regelmäßig darauf hin, daß ein Abbruch einer Anfahrphase durch den Fahrer unwahrscheinlich ist. Außerdem wird damit an Gefällestrecken gewährleistet, daß der Motor gegebenenfalls schon bei relativ geringer Fahrgeschwindigkeit bremswirksam werden kann.

Zusätzlich oder alternativ kann vorgesehen sein, die Drehzahldifferenz zwischen Eingang und Ausgang der Kupplung zu überwachen und von einer Verminderung des Kriechmomentes abzusehen, wenn Eingang und Ausgang der Kupplung aneinander angenäherte oder gleiche Drehzahlen erreicht haben. Derartige Drehzahlverhältnisse haben praktisch zwangsläufig zur Folge, daß eine höhere Fahrgeschwindigkeit vorliegt, denn eine bei heutigen Motoren übliche automatische elektronische Motorsteuerung stellt praktisch immer sicher, daß sich der Motor und damit der Kupplungseingang mit einer Mindestdrehzahl drehen.

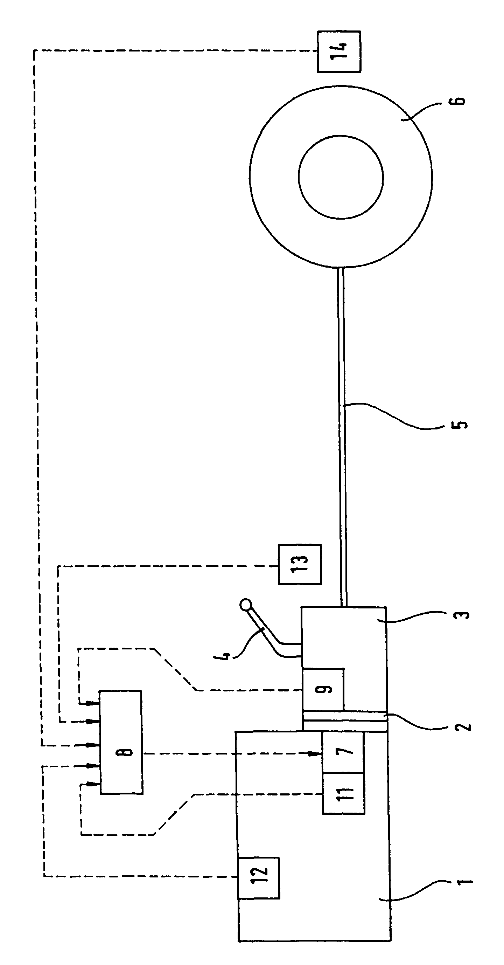

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung beschrieben wird.

Dabei zeigt die einzige Figur eine schematisierte Darstellung eines Antriebstranges eines Kraftfahrzeuges sowie der für die Kupplungssteuerung wesentlichen Komponenten.

Ein Verbrennungsmotor 1 ist über eine automatisch betätigte Kupplung 2 mit einem Getriebe 3, dessen Getriebstufen bzw. Gänge durch manuelle Betätigung eines Schalthebels 4 gewechselt werden, und eine Antriebswelle 5, z.B. eine Kardanwelle, mit Antriebsrädern 6 eines im übrigen nicht näher dargestellten Kraftfahrzeuges antriebsmäßig verbunden.

Die Betätigung der Kupplung 2 erfolgt automatisch mittels eines motorischen Stellaggregates 7, welches durch eine Steuerschaltung 8 betätigt wird. Die Steuerschaltung 8 berücksichtigt vielfältige Parameter und ist dazu mit einer umfangreichen Sensorik verbunden.

Die Sensorik umfaßt eine Sensoranordnung 9, welche dem Getriebe 3 bzw. dem Schalthebel 4 zugeordnet ist und dessen Stellungen und/oder Bewegungen erfaßt und damit die jeweils eingelegte Getriebstufe bzw. den jeweils eingelegten Gang registriert. Durch einen Sensor 10 wird die Stellung eines zur Leistungssteuerung des Motors 1 dienenden Organs, beispielsweise eines durch den Fahrer betätigten Fahrpedales, registriert. Ein Weggeber 11 erfaßt den Stellweg des Stellaggregates 7 und damit einen Parameter, welcher zur Größe des von der automatischen Kupplung 2 übertragbaren Momentes analog ist. Des weiteren ist die Steuerschaltung 8 mit einer Motorsteuerung 12 verbunden, deren Signale unter anderem die Drehzahl des Motors, das Drehmoment des Motors 1 sowie eine Betätigung eines Steuerorgans für die Leistung des Motors 1, z.B. die Betätigung eines Fahrpedals durch den Fahrer, wiedergeben. Ein Signalgeber 13 registriert, ob eine Betriebsbremse des Fahrzeuges betätigt ist. Bei diesem Signalgeber 13 kann es sich beispielsweise um einen Bremslichtschalter handeln, über den bei Betätigung der Betriebsbremse die Bremslichter gesteuert werden. Über Drehzahlgeber 14, welche den Fahrzeugrädern zugeordnet sind, werden die Raddrehzahlen und damit die Fahrgeschwindigkeit des Fahrzeuges erfaßt. Diese Drehzahlgeber 14 haben regelmäßig auch die Funktion, für ein Antiblockiersystem der Bremsanlage die notwendigen Informationen über die Raddrehungen bereitzustellen.

Aufgrund des Informationsaustausches mit der Motorsteuerung 12 kann die Steuerschaltung 8 das jeweils von der Kupplung 2 übertragene Moment in Abhängigkeit von der Stellung des Stellaggregates 7 ermitteln. Für das von der Kupplung 2 übertragene Moment $M_K$ gilt bei konstanter Fahrgeschwindigkeit:

$$M_K = M_{mot} - J_{mot} \, d\omega_{Mot}/dt.$$

Hierbei ist $M_{mot}$ das vom Motor 1 erzeugte Drehmoment, welches von der Motorsteuerung 12 erkannt wird, $J_{mot}$ das durch die Konstruktion des Motors 1 vorgegebene Trägheitsmoment des Motors 1 und $\omega_{Mot}$ die Drehzahl des Motors 1. Mit t wird die Zeit bezeichnet.

Da alle motorbezogenen Größen von der Motorsteuerung 12 erfaßbar sind und aus den Signalen der Drehzahlgeber 14 erkennbar ist, ob das Fahrzeug mit etwa konstanter Geschwindigkeit fährt, kann die Steuerschaltung 8 aufgrund ihres Zusammenwirkens mit der Motorsteuerung 12 und den Drehzahlgebern 14 regelmäßig das jeweilige Kupplungsmoment $M_K$ "erkennen". Darüber hinaus kennt die Steuerschaltung 8 aus den Signalen des Weggebers 11 die Position des Stellaggregates 7, so daß die Steuerschaltung 8 auch die Proportionalität zwischen dem Kupplungsmoment $M_K$ und dem Stellweg des Stellaggregates 7 regelmäßig ermitteln bzw. aktualisieren kann. Im Ergebnis "kennt" also die Steuerschaltung 8 das jeweils an der Kupplung 2 eingestellte übertragbare Moment.

In einer Anfahrsituation, d.h. bei stehendem Fahrzeug bzw. sehr geringer Fahrgeschwindigkeit, unbetätigter Fahrzeugbremse und nicht betätigtem Fahrpedal od.dgl. stellt die Steuerschaltung 8 das Stellaggregat 7 zunächst so ein, daß die Kupplung 2 ein vergleichsweise hohes Kriechmoment überträgt und das Fahrzeug eine ausgeprägte Kriechneigung aufweist. Dieser Zustand wird bei weiterhin nicht betätigtem Fahrpedal und unbetätigter Fahrzeugbremse nur für eine vorgegebene begrenzte Zeitspanne, beispielsweise einige Sekunden, aufrechterhalten. Danach wird das von der Kupplung 2 übertragbare Moment vermindert, womit auch die Kriechneigung des Fahrzeuges vermindert wird.

Sollte nun die Fahrzeugbremse betätigt werden, so kann bei Beendigung der Bremsbetätigung und unbetätigtem Fahrpedal und eingelegter Getriebstufe zunächst wiederum das hohe Kriechmoment eingestellt werden, welches dann gegebenenfalls wieder nach der vorgenannten Zeitspanne vermindert wird.

Sollte das Fahrzeug während der Zeitspanne mit dem hohen Kriechmoment einen Schwellwert der Fahrgeschwindigkeit überschreiten, kann eine Absenkung des Kriechmomentes unterbleiben.

**Patentansprüche**

1. Automatische Steuerung (8) einer Kupplung (2) im Antriebstrang (1,2,3,5,6) eines Kraftfahrzeuges mit fahrerseitig zwischen unterschiedlichen Getriebestufen bzw. Gängen geschaltetem Getriebe (3) und fahrerseitig durch ein Steuerorgan, z.B. Fahrpedal, gesteuertem Motor (1), wobei die Kupplung (2) durch ein von der Steuerung (8) betätigtes motorisches Stellaggregat (7) bei geringer Fahrgeschwindigkeit bzw. stehendem Fahrzeug und eingelegter Getriebestufe, unbetätigter Bremse und nicht betätigtem Steuerorgan automatisch auf ein Kriechmoment eingestellt wird,
**dadurch gekennzeichnet**,
daß bei geringer Fahrgeschwindigkeit bzw. stehendem Fahrzeug bei eingelegter Fahrstufe, unbetätigter Bremse und nicht betätigtem Steuerorgan zunächst ein für eine normale Anfahrsituation vorgesehenes relativ hohes Kriechmoment, welches das Fahrzeug sicher sowie vergleichsweise zügig anfahren läßt, eingestellt und nach vorgegebener Zeitspanne - bei weiterhin unbetätigter Bremse und nicht betätigtem Steuerorgan - automatisch unter entsprechender Verminderung einer Kriechneigung des Fahrzeuges vermindert wird.

2. Kupplung nach Anspruch 1,
**dadurch gekennzeichnet**,
daß nach Bremsbetätigung zunächst erneut das hohe Kriechmoment eingestellt wird.

3. Steuerung nach Anspruch 2,
**dadurch gekennzeichnet**,
daß die Kupplung (2) bei Betätigung der Bremse geöffnet wird, wenn die Fahrgeschwindigkeit des Fahrzeuges unter einen geringen Schwellwert fällt.

4. Kupplung nach einem der Ansprüche 1 bis 3,
**dadurch gekennzeichnet**,
daß die Absenkung des Kriechmomentes unterbleibt, wenn während der vorgegebenen Zeitspanne ein Schwellwert der Fahrgeschwindigkeit überschritten wird.

5. Kupplung nach einem der Ansprüche 1 bis 4,
**dadurch gekennzeichnet**,
daß die Absenkung des Kriechmomentes unterbleibt, wenn nach Eingang und Ausgang der Kupplung aneinander angenäherte oder gleiche Drehzahlen erreicht haben.

## Claims

1. An automatic control (8) of a clutch (2) in the drive train (1, 2, 3, 5, 6) of a motor vehicle, having a transmission (3) shifted by the driver between different transmission stages or gears and an engine (1) controlled by the driver by means of a control element, for example a gas pedal, the clutch (2) being automatically set by a motorized adjusting unit (7), actuated by the control (8), to a creeping torque at low travelling speed or when the vehicle is stationary and the transmission stage has been selected, the brake is unactuated and the control element is not actuated, wherein a relatively high creeping torque, envisaged for a normal starting situation and allowing the vehicle to start reliably and comparatively rapidly, is initially set, at low travelling speed or when the vehicle is stationary, the drive position has been selected, the brake is unactuated and the control element is not actuated, and, after a predetermined time period - if the brake continues to be unactuated and the control element is not actuated - is automatically reduced, with a corresponding reduction in a creeping tendency of the vehicle.

2. The control as claimed in claim 1, wherein, after brake actuation, the high creeping torque is initially set once again.

3. The control as claimed in claim 2, wherein the clutch (2) is released on actuation of the brake if the travelling speed of the vehicle falls below a low threshold value.

4. The control as claimed in one of claims 1 to 3, wherein the reduction in the creeping torque is relinquished if a threshold value for the travelling speed is exceeded during the predetermined time period.

5. The control as claimed in one of claims 1 to 4, wherein the reduction in the creeping torque is relinquished if the input and output of the clutch have reached speeds which are approaching one another or the same as one another.

## Revendications

1. Commande automatique (8) d'un embrayage (2) intercalé dans la chaîne cinématique (1, 2, 3, 5, 6) d'un véhicule automobile comprenant une boîte de vitesses (3) qui peut être manoeuvrée par le conducteur entre différents rapports de boîte ou différentes vitesses et comprenant un moteur (1) commandé par un organe de commande, par exemple une pédale d'accélérateur, commande dans laquelle l'embrayage (2) est automatiquement réglé sur un couple de patinage par un servodispositif motorisé (7) actionné par la commande (8), lorsque la vitesse de marche est faible ou lorsque le véhicule est à l'arrêt et lorsqu'un rapport de boîte est enclenché, que le frein n'est pas actionné et que l'organe de commande n'est pas actionné,
caractérisée
en ce qu'à une petite vitesse de marche ou avec le véhicule à l'arrêt, alors qu'un rapport de marche est enclenché, que le frein n'est pas actionné et que l'organe de commande n'est pas actionné, un couple de patinage relativement fort, prévu pour une situation de démarrage normal, qui fait démarrer le véhicule correctement ainsi que relativement rapidement, est établi initialement et en ce qu'après un laps de temps prédéterminé - alors que le frein reste encore non actionné et que l'organe de commande n'est pas actionné - ce couple est automatiquement réduit avec réduction correspondante de la tendance du véhicule à la marche lente avec patinage.

2. Embrayage selon la revendication 1,
        caractérisé
        en ce qu'après l'actionnement du frein, le fort couple de patinage est rétabli initialement.

3. Commande selon la revendication 2,
        caractérisée
        en ce que lors de l'actionnement du frein, l'embrayage (2) est desserré lorsque la vitesse de marche du véhicule tombe au-dessous d'une petite valeur de seuil.

4. Embrayage selon une des revendications 1 à 3,
        caractérisé
        en ce que la réduction du couple de patinage est supprimée lorsque, pendant le laps de temps prédéterminé, on passe au-dessus d'une valeur de seuil de la vitesse de marche.

5. Embrayage selon une des revendications 1 à 4,
        caractérisé
        en ce que l'abaissement du couple de patinage est supprimé lorsqu'on atteint des nombres de tours proches l'un de l'autre ou égaux sur l'entrée et la sortie de l'embrayage.